(19) Europäisches Patentamt
European Patent Office
Office européen des brevets

(11) **EP 4 786 212 A1**

(12) **EUROPEAN PATENT APPLICATION**

(43) Date of publication:
**05.08.2026 Bulletin 2026/32**

(21) Application number: **26150610.9**

(22) Date of filing: **07.01.2026**

(51) International Patent Classification (IPC):
***B60C 15/06*** (2006.01)

(52) Cooperative Patent Classification (CPC):
**B60C 15/0603;** B60C 2009/0276; B60C 2009/0441;
B60C 2015/061; B60C 2015/0614

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.01.2025 JP 2025015422
28.11.2025 JP 2025209533**

(71) Applicant: **SUMITOMO RUBBER INDUSTRIES,
LTD.
Kobe-shi, Hyogo 651-0072 (JP)**

(72) Inventors:
• **OMORI, CHISATO**
  **Hyogo, 651-0072 (JP)**
• **NAGASE, MASAHIRO**
  **Hyogo, 651-0072 (JP)**
• **KIKUCHI, HIROSHI**
  **Hyogo, 651-0072 (JP)**

(74) Representative: **Forresters IP LLP
Skygarden
Erika-Mann-Straße 11
80636 München (DE)**

(54) **PNEUMATIC TIRE**

(57)    A pneumatic tire (1) having a protruding portion (25) including a top portion (26) and a rim fit profile (27). In a tire meridian section of the pneumatic tire (1) in a standard state, a parameter X relating to rim chafing resistance performance, defined by $X = (A+10) \times B \times Hs \times E/10^5$, is 34 or more,
where
A: the shortest distance from the top portion (26) to a rim flange (16);
B: a distance from the top portion (26) to a tire radial direction line (RL) defining a rim width;
Hs: a rubber hardness of a bead apex rubber (8);
E: a modulus of a carcass ply (6A) calculated by $E = (F/G) \times H$;
G: an intermediate elongation (%) of a carcass cord under a constant load F;
F: the constant load (N) applied when obtaining the intermediate elongation G; and
H: ends of the carcass cords.

**FIG.4**

**Description**

RELATED APPLICATIONS

This application claims the benefit of foreign priority to Japanese Patent Applications No. JP2025-015422, filed January 31, 2025, and 2025-209533, filed November 28, 2025, which are incorporated by reference in its entirety.

FIELD OF THE INVENTION

The present invention relates to a pneumatic tire.

BACKGROUND OF THE INVENITON

Japanese Unexamined Patent Application Publication No. 2013-063676 (Patent Literature 1) discloses a pneumatic tire provided with a rim protector.

SUMMARY OF THE INVENTION

In recent years, reduction of the tire rolling resistance has been achieved by increasing the contact areas between the bead portions of the tire and the rim flange, thereby reducing the bending deformation of the bead portions. However, simply increasing the contact areas leads to increased friction between the bead portions and the rim flange, which brings about the problem of promoting wear of the bead portion (the so-called rim chafing).

The present disclosure has been made in view of the above, and a primary object thereof is to provide a pneumatic tire that can be expected to improve rim chafing resistance performance.

The present invention is a pneumatic tire including:

a tread portion;
a pair of bead portions each having a bead core embedded therein;
a carcass extending from one bead portion of the pair to the other bead portion of the pair; and
bead apex rubbers each extending outward in a tire radial direction from the bead core in a respective one of the bead portions, wherein
each of the bead portions has an outer surface in a tire axial direction provided with a protruding portion formed thereon,
the protruding portion protrudes axially outward and extends in a tire circumferential direction,
the protruding portion includes a top portion convex axially outward and a rim fit profile extending radially inward from the top portion,
the carcass includes at least one carcass ply in which a plurality of carcass cords is arranged,
in each axial half of a tire meridian section of the pneumatic tire in a standard state where the pneumatic tire is mounted on a rim, inflated to a standard inner pressure, and loaded with no tire load, a parameter X relating to rim chafing resistance performance, defined by the following Formula (1), is 34 or more:

$$X = (A+10) \times B \times Hs \times E/10^5 \ldots (1)$$

where,

$$E = (F/G) \times H$$

A: a shortest distance (mm) in the tire radial direction from the top portion to a rim flange of the rim;
B: a distance (mm) in the tire axial direction from the top portion to a tire radial direction line defining a rim width of the rim;
Hs: a rubber hardness of the bead apex rubbers;
E: a modulus of the at least one carcass ply (N/% × number of cords/5 cm);
G: an intermediate elongation (%) of the carcass cords under a constant load applied according to Japanese Industrial Standards JIS L1017;
F: the constant load (N) applied when obtaining the intermediate elongation G; and
H: ends (number of cords/5 cm) of the carcass cords.

**EP 4 786 212 A1**

By adopting the configuration described above, the pneumatic tire of the present disclosure can be expected to improve the rim chafing resistance performance.

BRIEF DESCRIPTION OF THE DRAWINGS

FIG. 1 is a tire meridian section, passing all through a tire rotational axis, showing an embodiment of a tire-rim assembly.

FIG. 2 is a partially enlarged view around one of bead portions of the tire and the rim shown in FIG. 1.

FIG. 3 is a cross-sectional view showing an example of the tire when a tire load is applied.

FIG. 4 is a partially enlarged view around one of the bead portions of the tire according to another embodiment and the rim.

DETAILED DESCRIPTION OF THE INVENTION

An embodiment of the present disclosure will now be described in conjunction with accompanying drawings. It should be understood that the drawings may contain exaggerated representations and representations that differ from the dimensional ratios of the actual structure in order to aid in understanding the present disclosure. Further, in case of multiple embodiments, identical or common elements are assigned with the same reference signs throughout the embodiments, and redundant explanations are omitted. Furthermore, the specific configurations represented in the embodiments and the drawings are intended to aid in understanding the contents of the present disclosure, and the present disclosure is not limited to the specific configurations illustrated.

[ Tire-Rim Assembly (First Embodiment) ]

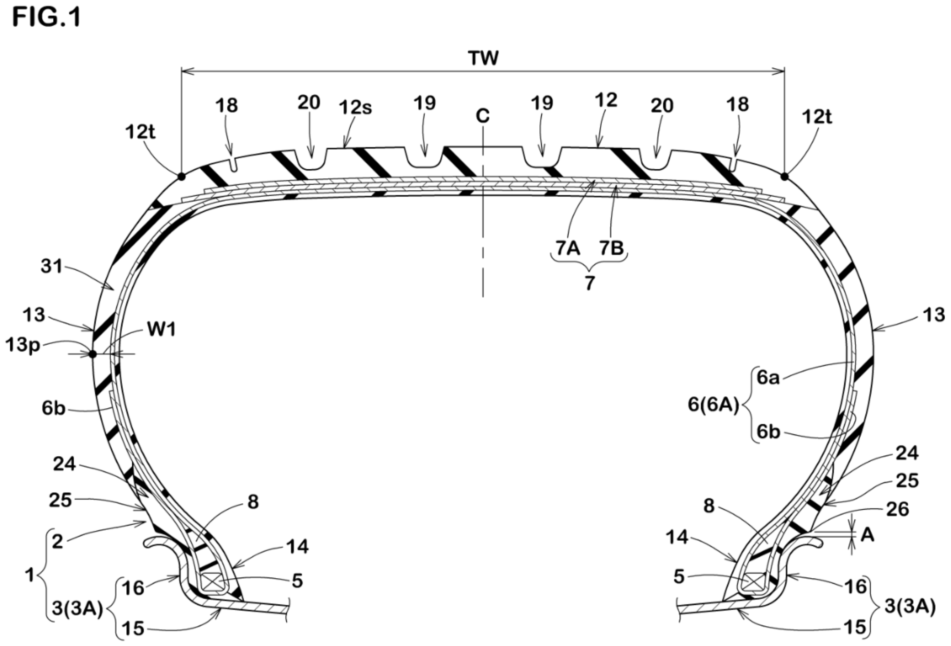

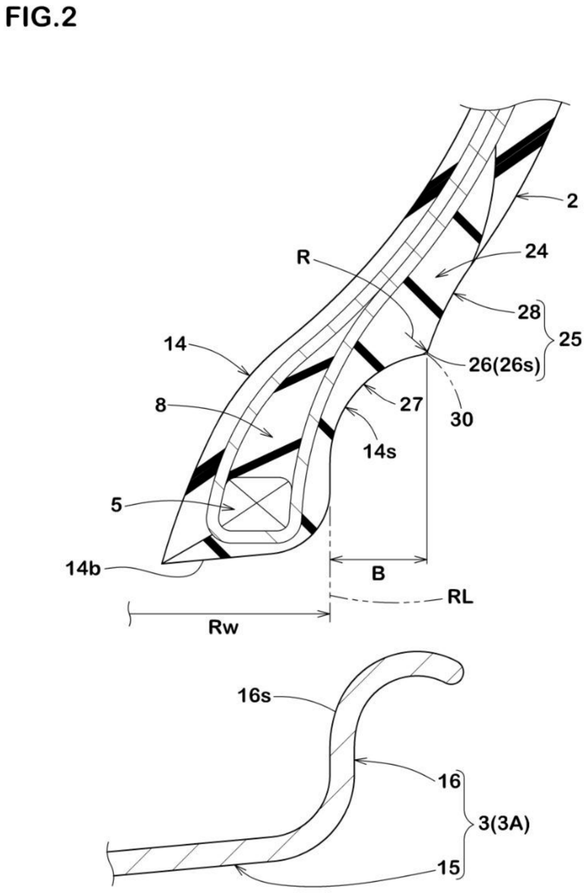

FIG. 1 is a tire meridian section, passing all through the tire rotational axis (not shown), showing one embodiment (i.e., the first embodiment) of a tire-rim assembly 1 (hereinafter, may sometimes be simply referred to as "assembly 1"). FIG. 1 illustrates a tire meridian section of the assembly 1 in a standard state, which will be described later. FIG. 2 is a partially enlarged view of a rim 3 and one of bead portions 14 of a pneumatic tire 2 (hereinafter, may sometimes be simply referred to as "tire 2") shown in FIG. 1. For convenience, the tire 2 and the rim 3 are shown separated in FIG. 2.

As shown in FIG. 1, the assembly 1 is configured to include the tire 2 and the rim 3 on which the tire 2 is mounted. The tire 2 is exemplified as a passenger vehicle tire, for example. It should be noted that the tire 2 may be a motorcycle tire or a heavy-duty tire.

[ Rim ]

As shown in FIG. 1 and FIG. 2, the rim 3 is configured to include a pair of rim bases 15 and a pair of rim flanges 16. Various types of rims may be adopted for the rim 3, however, it is preferred that a standard rim (3A) is adopted.

The "standard rim" refers to a wheel rim specified for the concerned tire (i.e., the tire 2 in this case) by a standard included in a standardization system on which the tire (i.e., the tire 2 in this case) is based. Therefore, the standard rim is "normal wheel rim" in JATMA, "Design Rim" in TRA, and a "Measuring Rim" in ETRTO, for example.

As shown in FIG. 2, the pair of the rim bases 15 are for receiving bottom surfaces (14b) of the pair of the bead portions 14 of the tire 2, respectively. On the other hand, the pair of the rim flanges 16 continue from outer ends in the tire axial direction of the rim bases 15 and extend radially outward, respectively.

The pair of the rim flanges 16 are each provided with an inner surface (16s) facing axially inside. The pair of the bead portions 14 can be supported by part of outer surfaces (14s) in the tire axial direction (including a rim fit profile 27 described later) of the pair of the bead portions 14 of the tire 2 contacting these inner surfaces (16s), respectively. Each of the inner surfaces (16s) includes an arcuate surface that is convex axially inward.

[ Pneumatic Tire ]

As shown in FIG. 1, the tire 2 of the present embodiment is provided with a tread portion 12, the pair of the bead portions 14, a carcass 6, and bead apex rubbers 8.

[ Tread Portion ]

The tread portion 12 is provided with a pair of tread ground contact edges (12t) and a pair of shoulder circumferential grooves 18. Furthermore, the tread portion 12 of the present embodiment is provided with a pair of center circumferential grooves 19 and a pair of middle circumferential grooves 20 between the shoulder circumferential grooves 18.

The pair of the tread ground contact edges (12t) correspond to axial ends of a ground contact surface (12s) when the tire 2 in the standard state is loaded with 70% of a standard tire load, and the tread portion 12 is in contact with a flat surface with zero camber angle.

The "standard state" refers to a state in which the tire 2 is mounted on the rim 3 (the standard rim (3A) in the present embodiment), inflated to a standard inner pressure, and loaded with no tire load. In the present specification, unless otherwise noted, the dimensions of various parts of the assembly 1 are shown as values measured in the standard state. It should be noted that usual dimensional errors (tolerances) that are unavoidable during manufacturing shall be allowed for dimensions and the like.

The "standard inner pressure" refers to air pressure specified for the concerned tire (the tire 2 in this case) by a standard included in a standardization system on which the tire (the tire 2 in this case) is based. Thereby, the standard inner pressure is the maximum air pressure in JATMA, the maximum value listed in the "TIRE LOAD LIMITS AT VARIOUS COLD INFLATION PRESSURES" table in TRA, and "INFLATION PRESSURE" in ETRTO, for example.

The "standard tire load" refers to a tire load specified for the concerned tire (the tire 2 in this case) by a standard included in a standardization system on which the tire (the tire 2 in this case) is based. Therefore, the standard tire load is the "maximum load capacity" in JATMA, maximum value listed in "TIRE LOAD LIMITS AT VARIOUS COLD INFLATION PRESSURES" table in TRA, and "LOAD CAPACITY" in ETRTO, for example.

[ Shoulder Circumferential Grooves ]

The shoulder circumferential grooves 18 are each adjacent to a respective one of the pair of the tread ground contact edges (12t) and extend continuously in the tire circumferential direction. The shoulder circumferential grooves 18 in the present embodiment extend linearly along the tire circumferential direction, however, they are not limited to this configuration. The shoulder circumferential grooves 18 may extend in a wavy or zigzag pattern, for example.

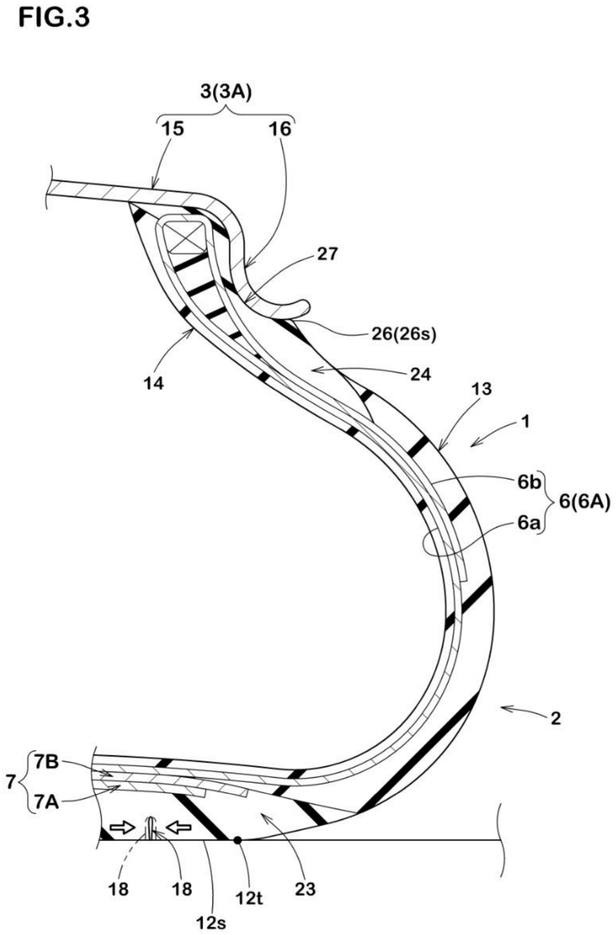

Generally, the ground contact surface (12s) of the tread portion 12 has a relatively smaller radius of curvature on the tread ground contact edges (12t) sides. FIG. 3 is a cross-sectional view showing an example of the tire 2 when loaded with a tire load.

As shown in FIG. 3, in a tread rubber 23 which is deformed when the ground contact surface (12s) of the tire 2 is grounded on a road surface (flat surface) and loaded with a tire load, a compressive strain in the tire axial direction increases toward the tread ground contact edges (12t) (the sides with the smaller radius of curvature). Such compressive strain tends to be particularly large in the tread rubber 23 near the ground contact surface (12s), which increases rolling resistance.

As shown in FIG. 1 and FIG. 3, each of the shoulder circumferential grooves 18 is provided adjacent to a respective one of the tread ground contact edges (12t). Due to this pair of the shoulder circumferential grooves 18, the tread rubber 23 can flexibly deform such that the groove width of each of the shoulder circumferential grooves 18 decreases when a tire load is applied to the tire 2 (assembly 1) as shown in FIG. 3. As a result, the tread rubber 23 spreads (intrudes) into the groove spaces of the shoulder circumferential grooves 18, thereby, reducing (absorbing) the compressive strain of the tread rubber 23 that would otherwise increase toward the tread ground contact edges (12t). Therefore, the rolling resistance of the tire 2 (assembly 1) is reduced (that is, rolling resistance performance is improved). In order to effectively exert this effect, it is preferred that a groove width (not shown) of each of the shoulder circumferential grooves 18 is in the range from 1 to 5 mm, and that a groove depth (not shown) of each of the shoulder circumferential grooves 18 is in the range from 3 to 7 mm.

[ Center Circumferential Grooves / Middle Circumferential Grooves ]

As shown in FIG. 1, the pair of the center circumferential grooves 19 and the pair of the middle circumferential grooves 20 are provided between the shoulder circumferential grooves 18. These pair of the center circumferential grooves 19 and the pair of the middle circumferential grooves 20 improve wet performance. The groove width (not shown) of each of the center circumferential grooves 19 and the middle circumferential grooves 20 can be set in the range from 2.0% to 8.0% of a tread ground contacting width TW, for example, and the groove depth (not shown) of each of the center circumferential grooves 19 and the middle circumferential grooves 20 can be set in the range from 4.0 to 10.0 mm, for example. It should be noted that the tread ground contacting width TW is specified as a distance in the tire axial direction between the tread ground contact edges (12t).

[ Bead Portion ]

Each of the bead portions 14 is provided with a bead core 5. Each of the bead cores 5 is formed by steel bead wires (not shown) wound in multiple stages and multiple rows, for example. As shown in FIG. 2, each of the bead portions 14 is provided with a clinch rubber 24 that forms the respective outer surface (14s).

Each of the outer surfaces (14s) in the tire axial direction of the bead portions 14 (clinch rubbers 24) in the present embodiment is provided with a protruding portion 25 formed thereon. These protruding portions 25 project axially outward. Further, the protruding portions 25 extend in the tire circumferential direction.

Each of the protruding portions 25 includes a top portion 26 and the rim fit profile 27. Further, each of the protruding portions 25 includes an outer profile 28 extending radially outward from the top portion 26.

The top portion 26 is formed to be convex axially outward. The top portion 26 of the present embodiment includes a convex arcuate surface (26s) protruding axially outward. The convex arcuate surface (26s) configured as such suppresses the occurrence of localized pressure on the top portion 26 when the tire 2 (assembly 1) is loaded with a tire load as shown in FIG. 3, therefore, it is possible that damage to the bead portions 14 (the so-called rim chafing) is suppressed. Thereby, the rim chafing resistance performance is improved.

As shown in FIG. 2, the rim fit profile 27 extends radially inward from the top portion 26. In the present embodiment, an outer end in the tire axial direction of the rim fit profile 27 is configured as the top portion 26.

The rim fit profile 27 in the present embodiment is formed in an arc shape that is convex axially inward. Therefore, the rim fit profile 27 has a shape that conforms to the shape along the inner surface (16s) in the tire axial direction of the rim flange 16, thereby, it is possible that a contact area between the rim fit profile 27 (protruding portion 25) and the rim flange 16 is secured. Therefore, as shown in FIG. 3, when a tire load is applied to the tire 2 (assembly 1), the bead portions 14 are firmly supported by the rim flanges 16, thereby, it is possible that the bending deformation of the bead portions 14 is suppressed. As a result, heat generation (energy loss) associated with the deformation of the bead portions 14 is decreased, and consequently, the rolling resistance of the tire 2 (assembly 1) is lowered (that is, the rolling resistance performance is improved). Further, by ensuring the contact area between the rim flange 16 and the rim fit profile 27 (protruding portion 25), the contact pressure of the bead portions 14 onto the rim flanges 16 can be dispersed. For this reason, wear of the bead portions 14 (rim chafing), which tends to occur due to increased friction between the bead portions 14 and the rim flanges 16, can be effectively suppressed. Therefore, rim chafing resistance performance is improved.

As shown in FIG. 2, the outer profile 28 extends radially outward from the top portion 26. The outer profile 28 of the present embodiment is formed in an arc shape that is convex axially inward, but is not particularly limited thereto.

[ Bead Apex Rubber ]

The bead apex rubber 8 extends radially outward from the bead core 5 in each of the bead portions 14. The bead apex rubber 8 is formed of a hard rubber. Therefore, high bending rigidity of the bead portions 14 is maintained, thereby, it is possible that the bending deformation of the bead portions 14 is suppressed. Therefore, an increase in the friction between the bead portions 14 (rim fit profiles 27) and the rim flanges 16 is suppressed, thereby, the rim chafing resistance performance is improved.

[ Carcass ]

As shown in FIG. 1, the carcass 6 extends between the bead portions 14. A belt layer 7 is disposed radially outside the carcass 6 and inside the tread portion 12.

The carcass 6 is configured to include at least one (one in the present embodiment) carcass ply (6A) in which a plurality of carcass cords is arranged. The carcass ply (6A) includes a main body portion (6a) and a pair of turned-up portions (6b), for example. The main body portion (6a) extends between the bead portions 14, for example. Each of the turned-up portions (6b) is connected to the main body portion (6a) and is turned up around a respective one of the bead cores 5 from the inside to the outside in the tire axial direction, for example.

As the carcass cords, organic fiber cords such as aramid or rayon are adopted, for example. It is preferred that the carcass cords are arranged at an angle in the range from 70 to 90 degrees with respect to the tire circumferential direction, for example.

When the tire 2 (assembly 1) is loaded with a tire load as shown in FIG. 3, tensile stress is generated in the carcass ply (6A) (mainly in the main body portion (6a)) in the bead portions 14 where the bending deformation occurs due to the deflection of sidewall portions 13. This tensile stress increases the bending rigidity of the bead portions 14, therefore, it is possible that the bending deformation of the bead portions 14 is suppressed. Thereby, the increase is suppressed in the contact pressure against the rim flanges 16 that tends to increase with the increase in the bending deformation of the bead portions 14, and thus the friction between the bead portions 14 and the rim flanges 16 can be prevented from increasing. As a result, the rim chafing resistance performance is improved.

[ Belt Layer ]

As shown in FIG. 1, the belt layer 7 is formed by two belt plies 7A and 7B overlapped with each other in the tire radial direction. The belt plies 7A and 7B include belt cords (not shown) arranged obliquely at an angle in the range from 10 to 35 degrees with respect to the tire circumferential direction, for example, and the belt plies 7A and 7B are overlapped so that the belt cords of the belt ply 7A intersect with the belt cords of the belt ply 7B. As the belt cords, steel, aramid, or rayon can be suitably adopted, for example.

[ Parameter X ]

In the present embodiment, as shown in FIG. 1 and FIG. 2, in each axial half of the tire meridian section of the tire 2 in the standard state in which the tire 2 is mounted on the rim 3, inflated to the standard inner pressure, and loaded with no tire load, a parameter X relating to the rim chafing resistance performance, defined by the following Formula (1), is limited to 34 or more.

$$X = (A + 10) \text{ x } B \text{ x } Hs \text{ x } E / 10^5 \ldots \text{(Formula 1)}$$

$$E = (F / G) \text{ x } H$$

where:

A: the shortest distance (in millimeter) in the tire radial direction from the top portion 26 to the rim flange 16;
B: a distance (in millimeter) in the tire axial direction from the top portion 26 to a tire radial direction line (RL) defining a rim width (Rw);
Hs: a rubber hardness of the bead apex rubber 8;
E: a modulus of the carcass ply (6A) (N/% x the number of the cords per 5 cm width of the carcass ply (6A));
G: an intermediate elongation (%) of the carcass cords under a constant load applied according to Japanese Industrial Standards JIS L1017;
F: a constant load (in N) applied when acquiring the intermediate elongation G;
H: ends of the carcass cords (the number of the carcass cords per 5 cm width of the carcass ply).

As a result of intensive research, the inventors found that the shortest distance A, the distance B, the rubber hardness Hs, and the modulus E in the above Formula (1) have a high correlation with the rim chafing resistance performance.
The shortest distance A in the above Formula (1) is the shortest distance (in millimeter) in the tire radial direction from the top portion 26 to the rim flange 16, as shown in FIG. 1. It should be noted that, as shown in FIG. 2, when the convex arcuate surface (26s) is formed on the top portion 26, the shortest distance A can be determined as the shortest distance in the tire radial direction from the rim flange 16 to an intersection point 30 (indicated by a two-dot chain line) of an extension line of the contour of the rim fit profile 27 and an extension line of the contour of the outer profile 28.
As shown in FIG. 1, the larger the shortest distance A, the more distant the top portion 26 protruding axially outward is positioned from the rim flange 16, therefore, the top portion 26 is less likely to come into contact with the rim flange 16, thereby, it is possible that the damage due to friction between the top portion 26 and the rim flange 16 is suppressed. Consequently, the rim chafing resistance performance can be improved.
The distance B in the above Formula (1) is the distance (in millimeter) in the tire axial direction from the top portion 26 to the tire radial direction line (RL) defining the rim width (Rw) (see JATMA, for example), as shown in FIG. 2. When the convex arcuate surface (26s) is formed on the top portion 26, as in the present embodiment, the distance B is determined as the distance in the tire axial direction from the tire radial direction line (RL) to the intersection point 30 of the extension line of the contour of the rim fit profile 27 with the extension line of the contour of the outer profile 28.
As the distance B (that is, the protruding height of the protruding portion 25) increases, the contact area between the rim fit profile 27 and the rim flange 16 increases. This disperses the contact pressure onto the rim flanges 16, therefore, it is possible that the rim chafing resistance performance is improved.
The rubber hardness Hs in the above Formula (1) is the rubber hardness of the bead apex rubber 8. It should be noted that the rubber hardness Hs can be specified as hardness measured by using a type-A durometer in accordance with Japanese Industrial Standards JIS K6253 under an environment of 23 degrees Celsius. The larger the rubber hardness Hs, the larger the bending rigidity of the bead portions 14 is. Therefore, wear of the bead portions 14 is decreased, thereby, it is possible that the rim chafing resistance performance is improved.

The modulus E in the above Formula (1) is the modulus of the carcass ply (6A) shown in FIG. 1. The modulus E is determined by multiplying the value (F/G), which is the constant load (F) divided by the intermediate elongation G, by the ends (H) of the carcass cords.

The intermediate elongation G is obtained as the elongation rate when the constant load (F) is applied to a single carcass cord, in accordance with "8.7 Elongation at Constant Load" in Japanese Industrial Standards JIS L1017 (Testing Methods for Chemical Fiber Tire Cords). The constant load (F) is the constant load applied to the carcass cord when obtaining the intermediate elongation G, and is determined by the type of fiber.

The ends (H) are the number of the carcass cords arranged per 5 cm width of the carcass ply (6A). It should be noted that the width of the carcass ply (6A) when determining the ends (H) is measured in a direction orthogonal to the longitudinal direction of the carcass cords.

The larger the value (F/G), which is the constant load (F) divided by the intermediate elongation G, the greater the tensile stress (modulus) per carcass cord is. Further, the larger the ends (H), the greater the number of the carcass cords that generate the tensile stress in the carcass ply (6A). Therefore, the modulus E of the carcass ply (6A) can be determined by multiplying the value (F/G) by the ends (H).

As described above, when a load is applied to the tire 2 (assembly 1) as shown in FIG. 3, the tensile stress is generated in the carcass ply (6A) (mainly in the main body portion (6a)) in the bead portions 14 where the bending deformation occurs. Therefore, as the modulus (tensile stress) (E) of the carcass ply (6A) increases, the bending rigidity of the bead portions 14 increases, thereby, the bending deformation of the bead portions 14 can be effectively suppressed. Therefore, the contact pressure on the rim flanges 16 is decreased, thereby, the wear of the bead portions 14 is decreased, and thus the rim chafing resistance performance is improved.

The inventors focused on the shortest distance A, the distance B, the rubber hardness Hs, and the modulus E described above, conducted various experiments, and as a result, identified the parameter X relating to the rim chafing resistance performance defined by the above Formula (1).

In the tire 2 where the parameter X is 34 or more, the contact pressure between the bead portions 14 and the rim flanges 16 is dispersed and/or the bending rigidity of the bead portions 14 is increased, therefore, it is possible to expect an improvement in the rim chafing resistance performance. In order to effectively exert this effect, the parameter X is preferably 64 or more, and more preferably 100 or more. On the other hand, if the parameter X is larger than necessary, the sidewall portion 13 becomes hard, which may lead to a deterioration in ride comfort. For this reason, it is preferred that the parameter X is 110 or less in combination with any of the above lower limit values.

It should be noted that if the shortest distance A (shown in FIG. 1) in the above Formula (1) becomes unnecessarily large, the contact area between the rim fit profile 27 and the rim flange 16 decreases, therefore, the bending deformation of the bead portions 14 increases, which may make it difficult to maintain the rolling resistance performance. From such a point of view, it is preferred that the shortest distance A is 3 mm or less. Further, when at least one of the distance B, the rubber hardness Hs, and the modulus E in the above Formula (1) is maintained large, it is most preferable that the shortest distance A be set to 0 mm. Therefore, it is possible that the bead portions 14 are firmly supported by the rim flanges 16 while dispersing the contact pressure of the bead portions 14 onto the rim flanges 16 when the tire 2 (assembly 1) is loaded with a tire load as shown in FIG. 3. As a result, the rolling resistance performance is improved while maintaining the rim chafing resistance performance.

It is preferred that the distance B (shown in FIG. 2) in the above Formula (1) is in the range from 7 to 12 mm. By setting the distance B to 7 mm or more, a large contact area between the rim fit profile 27 and the rim flange 16 is ensured, therefore, the contact pressure onto the rim flanges 16 can be dispersed. Thereby, it is possible that the rim chafing resistance performance is improved. Further, since the bending deformation of the bead portions 14 is suppressed, the rolling resistance performance is improved. From the viewpoint of effectively exhibiting such an effect, the distance B is preferably 8 mm or more, and more preferably 9 mm or more.

On the other hand, by setting the distance B to 12 mm or less, the rubber volume of the protruding portion 25 (clinch rubber 24) is suppressed from becoming unnecessarily large. Therefore, an increase in energy loss is prevented, thereby, the rolling resistance performance of the tire 2 (assembly 1) is improved. In order to effectively exert such an effect, the distance B is preferably 11 mm or less, and more preferably 10 mm or less in combination with any of the above lower limits. In the present embodiment, the most preferred distance B is 9.5 mm.

It is preferred that the rubber hardness Hs in the above Formula (1) is in the range from 80 to 100. By setting the rubber hardness Hs to 80 or more, high bending rigidity of the bead portions 14 is ensured, therefore, it is possible that the rim chafing resistance performance is improved. Further, since the bending deformation of the bead portions 14 is suppressed, the rolling resistance performance is improved. From the point of view of effectively exhibiting this effect, the rubber hardness Hs is preferably 85 or more, and more preferably 90 or more.

Meanwhile, by setting the rubber hardness Hs to 100 or less, it is possible to preferably improve the rolling resistance performance. It should be noted that the rubber hardness Hs may be set to less than 100 from the point of view of suppressing an increase in a vertical spring constant of the tire 2 and maintaining the ride comfort, for example, when going over a protrusion on the road surface. In this case, the rubber hardness Hs is preferably 100 or less, and more preferably 95 or less, in combination with any of the above lower limit values. In the present embodiment, the most preferred rubber hardness Hs is 90.

It is preferred that the modulus E in the above Formula (1) is in the range from 400 to 900 (N/% x number of cords/5 cm). By setting the modulus E to 400 or more (N/% x number of cords/5 cm), the tensile stress of the carcass ply (6A) (main body portion (6a)) can be maintained large. Thereby, the bending rigidity of the bead portions 14 is increased, therefore, the rim chafing resistance performance and the rolling resistance performance are improved. From the viewpoint of effectively exerting such an effect, the modulus E is preferably 500 or more (N/% x number of cords/5 cm), and more preferably 600 or more (N/% x number of cords/5 cm).

On the other hand, by setting the modulus E to 900 or less (N/% x number of cords/5 cm), the bending rigidity of the bead portions 14 is suppressed from becoming unnecessarily large, thereby, the deterioration of the ride comfort associated with the increase in the vertical spring constant can be prevented. From the point of view of effectively exhibiting this effect, in combination with any of the above lower limits, the modulus E is preferably 850 or less (N/% x number of cords/5 cm), and more preferably 800 or less (N/% x number of cords/5 cm). In the present embodiment, the most preferable modulus E is 750.

If the parameter X is large, the sidewall portions 13 may become harder from the center toward the outside in the tire radial direction. For this reason, it is preferred that a thickness W1 of the sidewall rubber 31 is 4.0 mm or less. As a result, the ride comfort is improved. Whereas, if the thickness W1 is smaller than necessary, the rigidity of the sidewall portions 13 decreases, thereby, the rolling resistance performance may not be sufficiently improved. From this perspective, it is preferred that the thickness W1 is 2.0 mm or more in combination with the above upper limit value. It should be noted that the thickness W1 is determined at the axially outermost position (maximum tire width position) (13p) of the profile of the tire 2 excluding partial protrusion.

As shown in FIG. 2, it is preferred that the radius of curvature R of the convex arcuate surface (26s) formed on the top portion 26 is set in the range from 0.3 to 1.5 mm. By setting the radius of curvature to 0.3 mm or more, localized pressure on the top portion 26 is suppressed, therefore, the rim chafing resistance performance is improved. From the viewpoint of effectively exerting this effect, the radius of curvature R is preferably 0.4 mm or more, and more preferably 0.5 mm or more. On the other hand, by setting the radius of curvature R to 1.5 mm or less, the convex arcuate surface (26s) (top portion 26) is suppressed from becoming unnecessarily large, thereby, the contact area between the rim flange 16 and the rim fit profile 27 extending radially inward from the top portion 26 can be ensured. Therefore, the rim chafing resistance performance is improved. From the point of view of effectively exhibiting such an effect, the radius of curvature R is preferably 1.3 mm or less, and more preferably 1.0 mm or less. In the present embodiment, the most preferred radius of curvature R is 0.5 mm.

[ Tire-Rim Assembly (Second Embodiment) ]

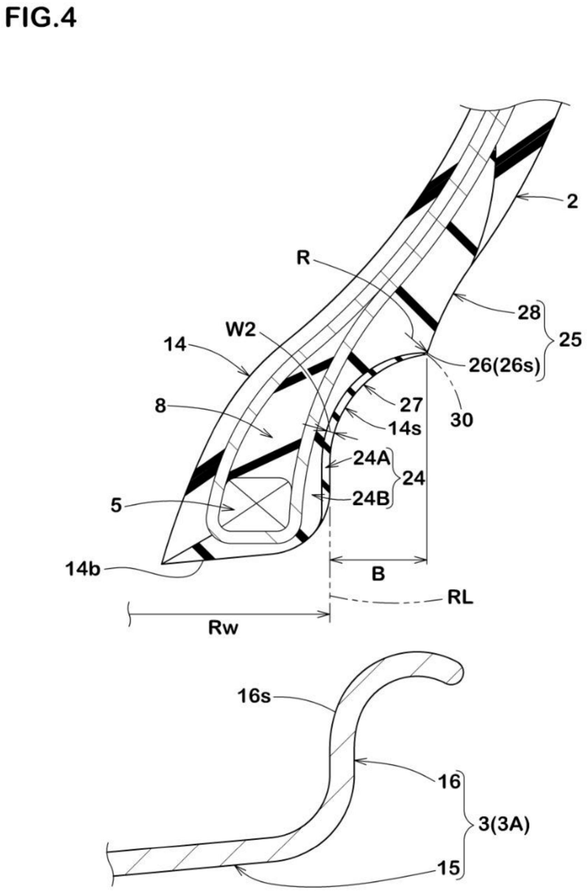

FIG. 4 is a partially enlarged view around one of the bead portions 14 of the tire 2 and the rim 3 according to another embodiment (i.e., the second embodiment) of the present invention. The clinch rubber 24 in the second embodiment includes a surface layer 24A forming the outer surface (14s) (rim fit profile 27) of the respective bead portion 14, and an inner layer 24B disposed on the inner side of the tire (i.e., axially inner side) of the surface layer 24A. The surface layer 24A has a rubber hardness smaller than a rubber hardness of the inner layer 24B. The surface layer 24A configured as such flexibly deforms when a tire load is applied to the tire 2 (assembly 1), therefore, the contact area between the rim fit profile 27 (protruding portion 25) and the rim flange 16 increases. Meanwhile, the inner layer 24B can maintain the rigidity of the respective bead portion 14. Thereby, slippage (friction) between the bead portions 14 and the rim flange 16 can be suppressed, and thus the rim chafing resistance performance is improved.

It is preferred that the rubber hardness of the surface layer 24A is in the range from 50% to 90% of the rubber hardness of the inner layer 24B. By setting the rubber hardness of the surface layer 24A to 90% or less of the rubber hardness of the inner layer 24B, the contact area between the rim fit profile 27 (protruding portion 25) and the rim flange 16 is increased. From such a point of view, it is more preferred that the rubber hardness of the surface layer 24A is 85% or less of the rubber hardness of the inner layer 24B. Meanwhile, by setting the rubber hardness of the surface layer 24A to 50% or more of the rubber hardness of the inner layer 24B, the rigidity of the respective bead portion 14 is maintained. From this point of view, it is more preferred that the rubber hardness of the surface layer 24A is 55% or more in combination with any of the above lower limit values.

The rubber hardness of the surface layer 24A and the rubber hardness of the inner layer 24B can be set as appropriate as long as the above relationships are satisfied. The rubber hardness of the surface layer 24A is preferably in the range from 45 to 60, and the rubber hardness of the inner layer 24B is preferably in the range from 70 to 80.

It is preferred that the surface layer 24A has a thickness W2 in the range from 0.3 to 1.5 mm. Since the thickness W2 is set to 0.3 mm or more, the surface layer 24A can deform flexibly, therefore, the contact area between the rim fit profile 27 (protruding portion 25) and the rim flange 16 is increased. From such a perspective, it is more preferred that the thickness W2 is 0.5 mm or more. Meanwhile, since the thickness W2 is set to 1.5 mm or less, the surface layer 24A is suppressed from deforming more than necessary, thereby, the rigidity of the respective bead portion 14 is maintained. From this viewpoint, it is more preferred that the thickness W2 is 1.2 mm or less in combination with any of the above lower limit values.

While detailed description has been made of the present disclosure according to especially preferred embodiment, the present disclosure can be embodied in various forms without being limited to the illustrated embodiment.

[ EXAMPLES ]

[ Examples A ]

Pneumatic tires having the basic structure shown in FIG. 1 were made by way of test according to the specifications in Table 1 (Examples 1 to 3). For comparison, a pneumatic tire in which the parameter X defined by the above Formula (1) was less than 34 (Reference 1) was made by way of test. Then, these test tires were tested for the rolling resistance performance, the rim chafing resistance performance, and the ride comfort. The common specifications and test methods are as follows:

Tire size: 235/60R18
Rim size: 18x7J
Tire inner pressure: 250 kPa
Radius of curvature R of Convex arcuate surface: 0.5 mm

< Rolling Resistance Performance >

While test tires were run on a simulated road surface of an indoor drum testing machine in accordance with ECE R117-02 (ECE Regulation No. 117 Revision 2), the rolling resistance value was measured. The evaluation was expressed as an index with the reciprocal of the rolling resistance value of Example 1 being 100. In the test results, a larger numerical value indicates lower rolling resistance and superior rolling resistance performance.

Vertical load: 5.94 kN
Speed: 80 km/h

< Rim Chafing Resistance Performance >

The test tires were run on the simulated road surface of the indoor drum testing machine, and the amount of wear (abrasion) of the clinch rubber after running 20,000 km was measured for each test tire. The evaluation was expressed as an index with the reciprocal of the wear amount of Example 1 being 100. In the test results, a larger numerical value indicates superior rim chafing resistance performance.

Tire load: 12.9 kN
Speed: 100 km/h
The test results are shown in Table 1.

Table 1.

|  | Ref. 1 | EX. 1 | EX. 2 | EX. 3 | EX. 4 |
|---|---|---|---|---|---|
| Presence or Absence of Protruding portion (Rim fit profile) | Presence | Presence | Presence | Presence | Presence |
| Shortest distance (A) from Top portion to Rim flange [mm] | 0 | 0 | 0 | 3 | 3 |
| Distance (B) from Top portion to Tire radial direction line [mm] | 7.0 | 9.5 | 9.5 | 10.8 | 12.0 |
| Rubber hardness (Hs) of Bead apex rubber | 85 | 90 | 100 | 100 | 100 |
| Modulus (E) of Carcass ply [N/% x number of cords/5 cm] | 350 | 400 | 750 | 750 | 750 |

(continued)

|  | Ref. 1 | EX. 1 | EX. 2 | EX. 3 | EX. 4 |
|---|---|---|---|---|---|
| Parameter (X) | 21.0 | 34.2 | 71.3 | 105.3 | 117.0 |
| Rolling resistance performance [index] | 94 | 100 | 105 | 98 | 95 |
| Rim chafing resistance performance [index] | 97 | 100 | 115 | 119 | 121 |

As seen from the test results, the test tires in Examples 1 to 4, in which the parameter X defined by the above Formula (1) was 34 or more, showed improved rim chafing resistance performance compared to the test tires in Reference 1, in which the parameter X was less than 34.

[ Examples B ]

Pneumatic tires having the basic structure shown in FIG. 1 were made by way of test in accordance with the specifications in Table 2 (Example 1, Examples 5 to 7, References 2 and 3). Then, these test tires were tested for the rolling resistance performance and the durability of the belt plies. The common specifications were as described in Example A, except for the specifications in Table 2 and the following specification. Further, the test method was as described in Example A.

Protruding portion (Rim Fit Profile): Present
The test results are shown in Table 2.

Table 2.

|  |  | EX.1 | EX.5 | Ref.2 | EX.6 | Ref.3 | EX.7 |
|---|---|---|---|---|---|---|---|
| Shortest distance (A) from Top portion to Rim flange | [mm] | 0 | 3 | 0 | 0 | 0 | 0 |
| Distance (B) from Top portion to Tire radial direction line | [mm] | 9.5 | 9.5 | 7.0 | 12.0 | 9.5 | 9.5 |
| Rubber hardness (Hs) of Bead apex rubber |  | 90 | 90 | 90 | 90 | 85 | 100 |
| Modulus (E) of Carcass ply | [N/% x number of cords/5 cm] | 400 | 400 | 400 | 400 | 400 | 400 |
| Parameter (X) |  | 34.2 | 44.5 | 25.2 | 43.2 | 32.3 | 38.0 |
| Rolling resistance performance | [index] | 100 | 98 | 98 | 98 | 99 | 101 |
| Rim chafing resistance performance | [index] | 100 | 104 | 98 | 104 | 99 | 103 |

As seen from the test results, the test tires in Example 1, in which the shortest distance A between the top portion 26 and the rim flange 16 was set to 0 mm, showed improved rolling resistance performance while maintaining the rim chafing resistance performance compared to the test tires in Example 5, in which the shortest distance A was set to 3 mm.
The test tires in Example 1, in which the distance B between the top portion and the tire radial direction line was within the preferable range, showed improved rim chafing resistance performance and improved rolling resistance performance compared to the test tires in Reference 2, in which the distance B was set to the lower limit of the preferable range. Further, the test tires in Example 1 showed improved rolling resistance performance while maintaining the rim chafing resistance performance, compared to the test tires in Example 6, in which the distance B was set to the upper limit of the preferable range.
The test tires in Example 1, in which the rubber hardness Hs of the bead apex rubber was within the preferable range, showed improved rim chafing resistance performance and improved rolling resistance performance compared to the test tires in Reference 3. Further, the test tires in Example 1 suppressed the increase in the vertical spring constant (in other words, the ride comfort was improved) while maintaining the rim chafing resistance performance and the rolling resistance performance, compared to the test tires in Example 7, in which the rubber hardness Hs was set to the upper limit of the preferred range.

[ Examples C ]

Pneumatic tires having the basic structure shown in FIG. 1 were made by way of test according to the specifications in Table 3 (Example 1, Example 8, and Reference 4). Then, these test tires were tested for the rolling resistance performance and the durability of the belt plies. The common specifications were as described in Example A, except for the specifications in Table 3 and the following specification. Further, the test method was as described in Example A.

Protruding portion (Rim Fit Profile): Present
The test results are shown in Table 3.

Table 3.

| | | Ref. 4 | EX. 1 | EX. 8 |
|---|---|---|---|---|
| Presence or Absence of Protruding portion (Rim fit profile) | | Presence | Presence | Presence |
| Shortest distance (A) from Top portion to Rim flange | [mm] | 0 | 0 | 0 |
| Distance (B) from Top portion to Tire radial direction line | [mm] | 9.5 | 9.5 | 9.5 |
| Rubber hardness (Hs) of Bead apex rubber | | 90 | 90 | 90 |
| Modulus (E) of Carcass ply | [N/% x number of cords/5 cm] | 350 | 400 | 750 |
| Parameter (X) | | 29.9 | 34.2 | 64.1 |
| Radius of curvature R of Convex arcuate surface | [mm] | 0.5 | 0.5 | 0.5 |
| Rolling resistance performance | [index] | 99 | 100 | 101 |
| Rim chafing resistance performance | [index] | 99 | 100 | 111 |

As seen from the test results, the test tires in Example 1 having the modulus E within the preferred range showed improved rim chafing resistance performance and improved rolling resistance performance compared to the test tires in Reference 4 having the modulus E less than the lower limit value of the preferred range. Further, the test tires in Example 1 suppressed the increase in the vertical spring constant (i.e., improved the ride comfort) while maintaining the rim chafing resistance performance and the rolling resistance performance, compared to the test tires in Example 8.

[ Description of Reference Signs ]

| | |
|---|---|
| 1 | pneumatic tire |
| 6A | carcass ply |
| 8 | bead apex rubber |
| 16 | rim flange |
| 25 | protruding portion |
| 26 | top portion |
| 27 | rim fit profile |

**Claims**

**1.** A pneumatic tire comprising:

a tread portion;

a pair of bead portions each having a bead core embedded therein;

a carcass extending from one bead portion of the pair to the other bead portion of the pair; and

bead apex rubbers each extending outward in a tire radial direction from the bead core in a respective one of the bead portions, wherein

each of the bead portions has an outer surface in a tire axial direction provided with a protruding portion formed thereon,

the protruding portion protrudes axially outward and extends in a tire circumferential direction,

the protruding portion includes a top portion convex axially outward and a rim fit profile extending radially inward from the top portion,

the carcass includes at least one carcass ply in which a plurality of carcass cords is arranged,

in each axial half of a tire meridian section of the pneumatic tire in a standard state where the pneumatic tire is mounted on a rim, inflated to a standard inner pressure, and loaded with no tire load, a parameter X relating to rim chafing resistance performance, defined by the following Formula (1), is 34 or more:

$$X = (A+10) \times B \times Hs \times E/10^5 \ldots (1)$$

where,

A: a shortest distance (mm) in the tire radial direction from the top portion to a rim flange of the rim;

B: a distance (mm) in the tire axial direction from the top portion to a tire radial direction line defining a rim width of the rim;

Hs: a rubber hardness of the bead apex rubbers;

E: a modulus (N/% $\times$ number of cords/5 cm) of the at least one carcass ply calculated by E = (F/G) $\times$ H;

G: an intermediate elongation (%) of the carcass cords under a constant load applied according to Japanese Industrial Standards JIS L1017;

F: the constant load (N) applied when obtaining the intermediate elongation G; and

H: ends (number of cords/5 cm) of the carcass cords.

2. The pneumatic tire according to claim 1, wherein the parameter X is in a range from 34 to 110.

3. The pneumatic tire according to claim 1 or 2, wherein the parameter X is in a range from 64 to 110.

4. The pneumatic tire according to any one of claims 1 to 3, wherein the parameter X is in a range from 100 to 110.

5. The pneumatic tire according to any one of claims 1 to 4, wherein the shortest distance A is in a range from 0 to 3 mm.

6. The pneumatic tire according to any one of claims 1 to 5, wherein the distance B is in a range from 7 to 12 mm.

7. The pneumatic tire according to any one of claims 1 to 6, wherein

the top portion includes a convex arcuate surface protruding axially outward, and

the convex arcuate surface has a radius of curvature in a range from 0.3 to 1.5 mm.

8. The pneumatic tire according to any one of claims 1 to 7, wherein the rubber hardness Hs is in a range from 80 to 100.

9. The pneumatic tire according to any one of claims 1 to 8, wherein the modulus E is in a range from 400 to 900 (N/% x number of cords/5 cm).

10. A tire-rim assembly comprising the pneumatic tire according to any one of claims 1 to 9 and 11, and a rim on which the pneumatic tire is mounted.

11. The pneumatic tire according to any one of claims 1 to 9, wherein

each of the bead portions is provided with a clinch rubber forming the outer surface of the respective bead portion,

the clinch rubber includes a surface layer forming the outer surface of the respective bead portion, and an inner layer disposed axially inside the surface layer, and

the surface layer has a rubber hardness smaller than a rubber hardness of the inner layer.

FIG.1

# FIG.2

**FIG.3**

# FIG.4

## EUROPEAN SEARCH REPORT

**Application Number**

EP 26 15 0610

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/339580 A1 (ARAKAWA KOJI [JP] ET AL) 4 November 2021 (2021-11-04) * paragraphs [0063], [0064]; claims; figures * | 1-11 | INV. B60C15/06 |
| A | JP H04 252703 A (YOKOHAMA RUBBER CO LTD) 8 September 1992 (1992-09-08) * claims; figures * | 1-11 | |
| A | US 2024/262137 A1 (KODA HIRAKU [JP] ET AL) 8 August 2024 (2024-08-08) * paragraphs [0046], [0049], [0058]; claims; figures * | 1-11 | |
| A | US 2021/387484 A1 (NISHIO KOJI [JP]) 16 December 2021 (2021-12-16) * paragraph [0056]; claims; figures * | 1-11 | |
| A | US 2017/225522 A1 (TOMITA SHINTARO [JP] ET AL) 10 August 2017 (2017-08-10) * claims; figures * | 1-11 | |
| | | | **TECHNICAL FIELDS SEARCHED (IPC)** |
| A | US 2021/094362 A1 (TERASHIMA MASAKI [JP] ET AL) 1 April 2021 (2021-04-01) * paragraph [0011]; claims; figures * | 1-11 | B60C |

The present search report has been drawn up for all claims

| Place of search | Date of completion of the search | Examiner |
|---|---|---|
| Munich | 15 May 2026 | Thanbichler, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 0610

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2026

| Patent document cited in search report | | Publication date | Patent family member(s) | | Publication date |
|---|---|---|---|---|---|
| US 2021339580 | A1 | 04-11-2021 | DE | 102021110586 A1 | 04-11-2021 |
| | | | US | 2021339580 A1 | 04-11-2021 |
| JP H04252703 | A | 08-09-1992 | NONE | | |
| US 2024262137 | A1 | 08-08-2024 | CN | 117730006 A | 19-03-2024 |
| | | | DE | 112022002301 T5 | 18-04-2024 |
| | | | JP | 7626942 B2 | 05-02-2025 |
| | | | JP | 2023015838 A | 01-02-2023 |
| | | | US | 2024262137 A1 | 08-08-2024 |
| | | | WO | 2023002703 A1 | 26-01-2023 |
| US 2021387484 | A1 | 16-12-2021 | CN | 112533776 A | 19-03-2021 |
| | | | DE | 112019004940 T5 | 24-06-2021 |
| | | | JP | 7115226 B2 | 09-08-2022 |
| | | | JP | 2020069992 A | 07-05-2020 |
| | | | US | 2021387484 A1 | 16-12-2021 |
| | | | WO | 2020090363 A1 | 07-05-2020 |
| US 2017225522 | A1 | 10-08-2017 | CN | 107053961 A | 18-08-2017 |
| | | | EP | 3210800 A2 | 30-08-2017 |
| | | | US | 2017225522 A1 | 10-08-2017 |
| US 2021094362 | A1 | 01-04-2021 | CN | 112572069 A | 30-03-2021 |
| | | | EP | 3798026 A1 | 31-03-2021 |
| | | | JP | 7415404 B2 | 17-01-2024 |
| | | | JP | 2021054295 A | 08-04-2021 |
| | | | US | 2021094362 A1 | 01-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2025015422 A
- JP 2025209533 A

- JP 2013063676 A